Europäisches Patentamt

European Patent Office

Office européen des brevets

(11) Publication number: **0 065 383**
**B1**

(12) **EUROPEAN PATENT SPECIFICATION**

(45) Date of publication of patent specification: **17.04.85**

(51) Int. Cl.⁴: **H 02 G 3/04, F 16 L 21/00, F 16 L 21/06**

(21) Application number: **82302304.9**

(22) Date of filing: **06.05.82**

(54) **Heat recoverable sleeve forming wrap.**

(30) Priority: **18.05.81 US 264739**

(43) Date of publication of application:
**24.11.82 Bulletin 82/47**

(45) Publication of the grant of the patent:
**17.04.85 Bulletin 85/16**

(84) Designated Contracting States:
**BE DE FR GB IT NL**

(56) References cited:
**EP-A-0 036 250**
**DE-A-2 909 979**
**GB-A-1 261 122**
**GB-A-2 054 781**
**GB-A-2 061 025**
**US-A-3 455 336**

(73) Proprietor: **AMP INCORPORATED**
**P.O. Box 3608 449 Eisenhower Boulevard**
**Harrisburg Pennsylvania 17105 (US)**

(72) Inventor: **Fisher, Howard Zane**
**R.D. No. 2**
**Hummelstown Pennsylvania, 17036 (US)**

(74) Representative: **Gray, Robin Oliver et al**
**BARON & WARREN 18 South End Kensington**
**London W8 5BU (GB)**

Courier Press, Leamington Spa, England.

## Description

This invention relates to heat recoverable material having integral latching means associated therewith so that the material may be wrapped around a structure, such as a cable, the edges latched together and heated so that it recovers towards its original smaller size.

A desirable method of repairing a tear in the insulation of a cable or a hole in a pipeline is to shrink a sleeve of heat recoverable material down around the damaged site. However, it may be impossible or impractical to place a sleeve onto the cable or pipe for one reason or the other. Accordingly, workers in the field have been working on lengths of material, referred to as a "wrap", which can be wrapped around the structure and then shrunk down. However, because the recovery forces in the material are so great, difficulties have been encountered in keeping the overlapping side edges of the wrap together. Adhesives have been tried without great success. The first successful mechanical means for holding the side edges together was disclosed in U.S. Patent No. 3 455 336 to Ellis. In moulding his material, rails on each side edge were moulded as an integral part. Each rail has an enlarged, non-symmetrical top portion and a reduced neck portion to provide a downwardly facing shoulder. These rails are physically confined during expansion of the wrap. In use, the wrap is wrapped around a structure and, with the two rails held together, a metal, C-shaped fastener is placed across both rails by sliding with the sides of the fastener being positioned under the shoulders. Upon the application of heat, the wrap material recovers down into a tight band around the structure. The rails, not being originally expanded, retain their size and shape during the recovery and thus, the integrity of the latch is maintained. Where a suitable heat activated adhesive is used, or where the material is self bonding, the metal fastener and rails may be cut away to reduce the profile of the wrap.

U.S. Patent No. 4 123 047 to Koht et al disclosed another mechanical device for gripping and keeping the two edges of the wrap closed during recovery. Their mechanical device consists of a plurality of manually operable clips connected together in a given length by means of a flexible cable. The clips having a pair of cooperating jaws which engage and clamp the two laid-together sides of the wrap. The heat recoverable material of Koht et al differs from that of Ellis in that the entire length of material is expanded including the sides.

It is known for example from GB—A—2 061 025, GB—A—2 054 781 and EP—A—0036250, the latter lying within the terms of Art 54(3), EPC, to provide a heat recoverable wrap which comprises a rib adjacent but spaced from one side by a portion extending beyond the rib and at the other side a clasp comprising a laterally extending C-shaped hook. The rib is formed with an undercut remote from the side edge to provide an overhang arranged to be engaged by C-shaped hook. In the wrap of EP—A—0036250 the wrap side edge portion having the rib is formed with a further rib at the side edge, the ribs forming therebetween a groove arranged to receive a ridge-like protuberance formed internally of the hook. In addition the side edge portion on a side of the further rib opposite the hook is formed with an internal flap whereby the opposite side edge is received between the flap and the protuberance in order to resist bending during heat recovery.

It is an object to provide a wrap of the kind in question in which secure engagement between opposed side edges is obtained and which is economic to produce.

According to the invention a heat recoverable wrap of cross-linked, expanded material for wrapping around a cylindrical object and having adjacent one side edge but spaced therefrom a lengthwise extending rib to provide a wrap edge portion extending beyond the rib, the rib having an undercut remote from the side edge to provide an overhanging portion and, on the other side edge, a lengthwise extending clasp with a laterally extending C-shaped hook for engaging the overhanging portion, characterised by the rib presenting a straight side facing the other side edge and the other side edge presenting an end face of substantially equal thickness to and arranged for abutting the straight side when the C-shaped hook is engaged, and with the wrap side edge overlapping the opposite wrap side edge portion.

An embodiment of the invention will now be described by way of example with reference to the accompanying drawings, in which:

Figure 1 is a perspective view showing the wrap of the present invention being placed around a damaged cable;

Figure 2 is a perspective view showing the wrap after being recovered down onto the cable;

Figures 3 and 4 are cross-sectional views showing the method of latching the two side edges of the wraps together as well as the structure of one embodiment of the cooperating latching means on the side edges of the wrap;

Figure 5 is a perspective view of the embodiment of the clasp of Figures 3 and 4;

Figure 6 is a perspective view of another embodiment of the clasp constructed in accordance with the present invention; and

Figure 7 is a cross-sectional view of the embodiment of Figure 6 showing its placement in the associated wrap side edge and the opposed side edges latched together.

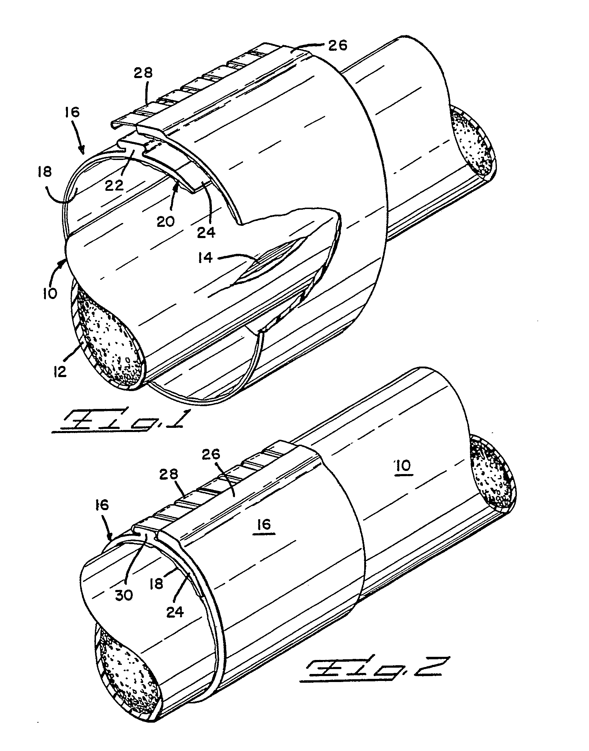

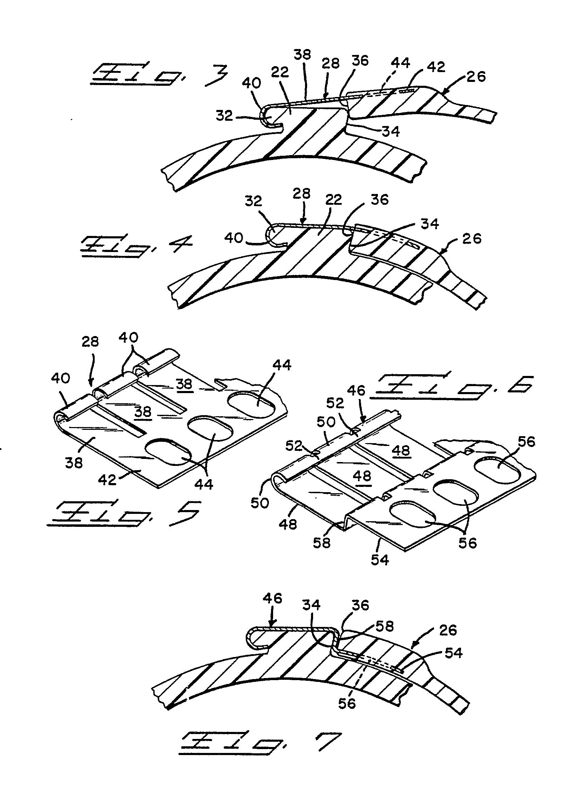

Cable 10 shown in Figures 1 and 2 represents a telephone cable containing hundreds of small gauge telephone lines. The outer protective jacket 12 has been torn open as indicated by reference numeral 14 and must be repaired to prevent ingress of moisture. As the cable extends for a considerable distance in either direction, a tubular heat recoverable article cannot be used. Accordingly, cross-linked, heat recoverable wrap 16, constructed in accordance with the concepts of the present invention, is employed to provide an effective, moisture-proof band. The wrap, having a heat activated adhesive 18 on its inner surface, is wrapped around the cable in overlying registration with the damaged area 14. The side edge 20 of the wrap which carries rib 22 thereon and whose bevelled free end 24 extends beyond the rib, is placed under opposite side edge 26 of the wrap which carries clasp 28. The clamp is latched onto rib 22 and heat is applied. Longitudinal shrinkage occurs so that the wrap shrinks down or recovers around the cable. Preferably, the diameter of the cable is greater than the ultimate recovery of the wrap so that the recovery forces in the wrap effect an extremely tight band around the cable. The adhesive fuses and flows into the tear and also provides adhesion between the wrap and cable jacket after cooling.

Figure 2 shows the wrap after being recovered about the cable. As indicated by reference numeral 18, the adhesive has flowed completely around the cable and some has been squeezed out along the ends 30 of the wrap. The bevelled free end 24 provides a smooth overlap for side edge 26. Additionally, adhesive on the inside surface of side edge 26 has bonded that side edge to end 24 so that the wrap is now, in effect, a continuous one piece covering.

Figure 3 shows the structure of rib 22 and clasp 28 in section. The rib is undercut on one side to provide an overhang 32. The opposite side 34 of the rib is straight. Side edge 26 is thicker to accommodate the clasp and to provide a face 36 of substantially the same thickness as rib 22.

Figure 5 shows clasp 28 in perspective. It is an elongated member preferably stamped and formed from a coplanar strip of metal (not shown) such as steel. Other metals and other materials having sufficient rigidity would be suitable also. Fingers 38 are defined along one side by slotting. The free ends of the fingers are formed around into C-shaped hooks 40. The remaining width, hereinafter referred to as strap 42 of the clasp, contains spaced holes 44.

Returning to Figure 3, the section drawing shows that strap 42 is embedded in side edge 26 with the material filling holes 44 to anchor the strap. The strap is positioned near the upper surface of the side edge.

The edges of wrap 16 are latched together by catching hooks 40 onto overhang 32. This requires angling side edge 26 as illustrated in Figure 3. With the hooks caught, the side edge 26 is brought down so that face 36 abuts side 34 of the rib straight on. The two side edges are latched together as shown in Figure 4 and cannot come apart under the linear pull that the latched side edges will see during recovery. However, the side edges may be unlatched prior to recovery simply by pulling side edge 26 upwardly to clear rib side 34 and then pushing forwardly so that hooks 40 can clear overhang 32.

Figure 6 is a perspective view of another embodiment of a clasp. This clasp, indicated by reference numeral 46, has a plurality of fingers 48 on one side with the free ends formed into C-shaped hooks 50. The slots defining the fingers are confined within the clasp material so that each hook is connected to the adjacent hook by a strip of material indicated by reference numeral 52. Strap 54 contains spaced holes 56. However, in this embodiment, the strap is offset vertically from the fingers by bend 58.

Clasp 46 is embedded in side edge 26 near the lower surface so that bend 58 covers face 36 and abuts side 34 when the two side edges are latched together as shown in Figure 7.

**Claims**

1. A heat recoverable wrap of cross-linked, expanded material for wrapping around a cylindrical object and having adjacent one side edge (20) but spaced therefrom a lengthwise extending rib (22) to provide a wrap edge portion (24) extending beyond the rib (22), the rib (22) having an undercut remote from the side edge (20) to provide an overhanging portion (32) and, on the other side edge (26), a lengthwise extending clasp (28) with a laterally extending C-shaped hook (40) for engaging the overhanging portion (32), characterised by the rib presenting a straight side (34) facing the other side edge (26) and the other side edge (26) presenting an end face (36) of substantially equal thickness to and arranged for abutting the straight side (34) when the C-shaped hook is engaged and with the wrap side edge (26) overlapping the opposite wrap side edge portion (24).

2. A heat recoverable wrap (16) according to claim 1, characterised in that the outwardly projecting free end of the clasp (28) is slotted to define a plurality of fingers (48) with the free ends of the fingers (48) being formed into C-shaped hooks (50).

3. The heat recoverable wrap (16) according to claim 2 characterised in that the side (42) of the clasp (28) opposite the fingers (48) contains spaced apart holes (56) so that upon embedding the clasp (28) in the material, the material flows through the holes (56) to anchor the clasp (28) therein.

4. The heat recoverable wrap (16) according to claim 3 characterised in that the opposite side (42) of the clasp is vertically offset relative to the fingers (48).

5. The heat recoverable wrap (16) according to claim 2 or 3 characterised in that the C-shaped hooks (50) at the free ends of the fingers (48) are interconnected one to the other.

**Patentansprüche**

1. Durch Wärme zurückbildbare Manschette aus vernetztem, gestreckten Material zum Herumlegen um einen zylindrischen Gegenstand, wobei die Manschette in der Nähe eines seitlichen Rands (20), jedoch von diesem beabstandet, eine sich längs erstreckende Rippe (22) aufweist, so daß ein sich jenseits der Rippe (22) erstreckender Manschettenrandbereich (24) gebildet ist, wobei die Rippe (22) auf der von dem seitlichen Rand (20) abgelegenen Seite eine Unterschneidung zur Schaffung eines überhängenden Bereichs (32) aufweist, und wobei die Manschette an dem anderen seitlichen Rand (26) eine sich längs erstreckende Klammer (28) mit einem sich seitlich erstreckenden C-förmigen Haken (40) zum Angreifen an dem Überhängenden Bereich (32) aufweist, dadurch gekennzeichnet, daß die Rippe eine dem anderen seitlichen Rand (26) zugewendete gerade Seite (34) darbietet, und daß der andere seitliche Rand (26) eine Endfläche (36) darbietet, die im wesentlichen dieselbe Dicke wie die gerade Seite (34) aufweist und dazu ausgelegt ist, an der geraden Seite (34) anzuliegen, wenn sich der C-förmige Haken in Eingriff befindet und der seitliche Manschettenrand (26) den gegenüberliegenden seitlichen Manschettenrandbereich (24) überlappt.

2. Durch Wärme zurückbildbare Manschette (16) nach Anspruch 1, dadurch gekennzeichnet, daß das nach außen hervorstehende freie Ende der Klammer (28) zur Bildung einer Mehrzahl von Fingern (48) geschlitzt ist, wobei die freien Enden der Finger (48) in C-förmige Haken (50) geformt sind.

3. Durch Wärme zurückbildbare Manschette (16) nach Anspruch 2, dadurch gekennzeichnet, daß die den Fingern (48) gegenüberliegende Seite (42) der Klammer (28) voneinander beabstandete Löcher (56) aufweist, so daß nach dem Einbetten der Klammer in das Material das Material durch die Löcher (56) fließt, um die Klammer (28) darin zu verankern.

4. Durch Wärme zurückbildbare Manschette (16) nach Anspruch 3, dadurch gekennzeichnet, daß die gegenüberliegende Seite (42) der Klammer gegenüber den Fingern (48) in senkrechter Richtung versetzt ist.

5. Durch Wärme zurückbildbare Manschette (16) nach Anspruch 2 oder 3, dadurch gekennzeichnet, daß die C-förmigen Haken (50) an den freien Enden der Finger (48) miteinander verbunden sind.

**Revendications**

1. Bande thermorétractable en matière dilatée, réticulée, destiné à être placée autour d'un objet cylindrique et comportant un premier bord latéral (20), adjacent à une nervure longitudinale (22), mais espacé de celle-ci pour former une partie de bord (24) de la bande s'étendant au-delà de la nervure (22), la nervure (22) présentant une entaille éloignée du bord latéral (20) afin de former une partie en surplomb (32) et, sur l'autre bord latéral (26), une agrafe (28) s'étendant longitudinalement, comportant un crochet (40) de forme en C s'étendant latéralement, destiné à s'enclencher avec la partie en surplomb (32), caractérisée en ce que la nervure présente un côté droit (34) tourné vers l'autre bord latéral (26) et l'autre bord latéral (26) présente une face extrême (36) d'épaisseur sensiblement égale à celle du côté droit (34) et disposée de façon à buter contre le côté droit (34) lorsque le crochet de forme en C est enclenché, le bord latéral (26) de la bande recouvrant la partie du bord latéral opposé (24) de la bande.

2. Bande thermorétractable (16) selon la revendication 1, caractérisée en ce que l'extrémité libre, faisant saillie vers l'extérieur, de l'agrafe (28) est fendue de façon à présenter plusieurs doigts (48) dont les extrémités libres sont configurées en crochets (50) de forme en C.

3. Bande thermorétractable (16) selon la revendication 2, caractérisée en ce que le côté (42) de l'agrafe (28) opposé aux doigts (48) contient des trous espacés (56) de manière que, lorsque l'agrafe (28) est encastrée dans la matière, la matière coule dans les trous (56) pour ancrer l'agrafe (28).

4. Bande thermorétractable (16) selon la revendication 3, caractérisée en ce que le côté opposé (42) de l'agrafe est décalé verticalement par rapport aux doigts (48).

5. Bande thermorétractable (16) selon la revendication 2 ou 3, caractérisée en ce que les crochets (50) de forme en C situés aux extrémités libres des doigts (48) sont reliés entre eux.

*Fig.1*

*Fig.2*

Fig. 3

Fig. 4

Fig. 5

Fig. 6

Fig. 7